# EUROPÄISCHE PATENTANMELDUNG

(11) **EP 4 759 119 A1**
(43) Veröffentlichungstag der Anmeldung: **17.06.2026**
(21) Anmeldenummer: 24219816.6
(22) Anmeldetag: 13.12.2024
(51) Int. Cl.: A01D 43/08, A01D 57/20, B65G 15/44

(54) **ERNTEVORSATZ ZUR GANZPFLANZENERNTE**

(71) Anmelder: Deere & Company, Moline, IL 61265 (US)
(72) Erfinder: SCHROEDER, Maximilian, 68163 Mannheim (DE); SCHLAMANN, Frank, 68163 Mannheim (DE); BONGERT, Dirk, 68163 Mannheim (DE); LEVELING, Ralf, 68163 Mannheim (DE)
(74) Vertreter: Holst, Sönke

(57) **Zusammenfassung**

Ein Erntevorsatz (20) zur Ganzpflanzenernte, der an einer Erntemaschine (10) anbringbar und in einer Vorwärtsrichtung (V) über ein Feld bewegbar ist, umfasst:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46, 46') und ein zweites Querförderband (48, 48') zur Querförderung der durch die Mäh- und Einzugseinrichtungen (40) aufgenommenen Pflanzen in Richtung auf die Längsmittelebene des Erntevorsatzes (20), wobei die Querförderbänder (46, 46`, 48, 48`) jeweils mit quer zur Förderrichtung ausgerichteten Mitnehmern (58) ausgestattet sind, und
einen Abgabeförderer (50) zur Förderung der von den Querförderbändern (46, 46', 48, 48') einlaufenden Pflanzen nach hinten zu einer rückwärtigen Abgabestelle des Erntevorsatzes (20),
wobei die Querförderbänder (46, 46`, 48, 48'), zusätzlich zu den Mitnehmern (58), mit Erhebungen (60, 60') ausgestattet sind.

## Beschreibung

Die Erfindung betrifft einen Erntevorsatz zur Ganzpflanzenernte, der an einer Erntemaschine anbringbar und in einer Vorwärtsrichtung über ein Feld bewegbar ist.

### Technologischer Hintergrund

Zur Ernte vollständiger, stängelartiger Pflanzen, wie Getreide oder Gras, werden im Stand der Technik unter anderem Erntevorsätze mit Querförderbändern (so genannte "Draper Belts") verwendet. Für die Getreideernte sind Schneidwerke bekannt, welche die Pflanzen mittels einer Haspel festhalten bzw. nach hinten fördern und mit Mähmessern abschneiden. Die abgeschnittenen, oberirdischen Teile der Pflanzen kommen auf Querförderbändern zu liegen und werden durch diese zur Mitte des Erntevorsatzes transportiert. Dort werden sie durch ein mittleres Förderband übernommen, das sie nach hinten abfördert und durch eine rückwärtige Öffnung in einen Schrägförderer abgibt. Der Schrägförderer fördert die Pflanzen in eine selbstfahrende Erntemaschine, in der Regel einen Mähdrescher.

Erntevorsätze mit Querförderbändern werden auch in Verbindung mit Feldhäckslern zur Ernte von Grüngut (Gras oder anderen, niedrigeren stängelartigen Pflanzen, wie Getreidepflanzen für die Ganzpflanzensilage) mittels einer Aufnehmertrommel (Pick-up) oder eines Trommel- oder Scheibenmähwerks (EP 1 256 272 A1, EP 3 058 802 A1) oder unteren Schneidscheiben und koaxial darüber angeordneten Förderrotoren (DE 10 2015 206 845 A1 für die Ernte von kleineren Pflanzen als Mais) verwendet.

Die EP 4 356 713 A1 zeigt weiterhin einen für die Maisernte vorgesehenen Erntevorsatz mit Querförderbändern, denen Mäh- und Einzugseinrichtungen mit unteren Schneidscheiben und jeweils mehreren, koaxial darüber angeordneten Förderrotoren vorgelagert sind.

Wenn man allerdings den Quertransport der größeren Pflanzen, wie Mais, mittels Querförderbändern bewerkstelligt, stellt sich - anders als bei den kleineren Pflanzen wie Gras und Getreide, die in der Regel mehr oder weniger problemlos durch die Mitnehmer und oder das eigentliche Förderband des Querförderband mitgenommen werden - das Problem einer geordneten Übergabe der Pflanzen, die wesentlich schwerer als Gras oder Getreide sind, von den Mäh- und Einzugseinrichtungen auf die Querförderbänder. Bisherige Erntevorsätze für die Maisernte verwenden zum Quertransport der Pflanzen rückwärtig der Mäh- und Einzugseinrichtungen angeordnete Querfördertrommeln mit vertikalen Drehachsen, vgl. EP 0 760 200 A1. Dadurch werden die Pflanzen zunächst im stehenden Zustand von den Mäh- und Einzugseinrichtungen abgegeben und von den Querfördertrommeln übernommen. Während des Quertransports neigen die Pflanzen sich dann zunehmend entgegen der Förderrichtung nach hinten, d.h. gegenüber der Vorwärtsrichtung des Erntevorsatzes über das Feld zur Seite. Auf diese Weise wird gewährleistet, dass die Pflanzen aktiv gefördert werden, auch wenn nicht über die ganze Breite des Erntevorsatzes Erntegut einlaufen sollte. Diese aktive Förderung ist jedoch bei Verwendung von Querförderbändern nicht oder zumindest in geringerem Maße gegeben, da die Wechselwirkung zwischen den Pflanzen und den Förderbändern bzw. deren Mitnehmern allein auf der Gravitation beruht. Mit anderen Worten werden die Pflanzen von der Mäh- und Einzugseinrichtung auf das Förderband abgegeben, fallen mangels Halts durch aktive Fördermittel mit ihren Köpfen entgegen der Förderrichtung nach hinten um und werden mehr oder weniger gut durch das Förderband erfasst und mitgenommen, ggf. erst durch andere, bereits auf dem Förderband liegende Pflanzen.

Bei Schneidwerken mit Querförderbändern wurde vorgeschlagen, die mittleren Förderbänder mit Merkmalen auszustatten, die Körnerverluste vermindern sollen, beispielsweise U-förmigen Mitnehmern (EP 3 414 986 A1) oder seitlichen, nach oben ragenden Stiften oder schlaufenförmigen Erhebungen (DE 10 2015 117 787 A1). Schließlich beschreibt die DE 10 2022 124 860 A1 einen Erntevorsatz für die Ernte stängelartiger Pflanzen mit einem unteren Messerbalken und dahinter angeordneten, endlosen Fördermitteln, die mit sich in Vorwärtsrichtung erstreckenden Mitnehmern ausgestattet sind, zwischen welchen ein nach vorn offener Zwischenraum vorgesehen ist, in dem die Stängel aufgenommen und in aufrechter Stellung transportiert werden.

### Aufgabe

Das beschriebene Übernahmeverhalten der Förderbänder hat den Nachteil, dass die größeren (Mais-) Pflanzen nicht in allen Fällen gleichmäßig durch die Förderbänder angenommen werden. Es entstehen, zumindest bei ungünstigen Erntegutbedingungen, wie hoher Feuchtigkeit der Pflanzen, Lücken und größere Pakete im Erntegutstrom auf dem Förderband. Da der der Erntemaschine zugeführte Erntegutstrom ungleichmäßig ist, erhält man eine ungleichmäßige Beaufschlagung der Erntemaschine und eine nicht-optimale Ausnutzung ihres Antriebs und im Extremfall sogar Verstopfungen, die zeitaufwändig zu beseitigen sind. Die Mitnehmer zur Verminderung der Körnerverluste der mittleren Förderbänder sind nicht in der Lage, das besagte Problem der Übergabe der größeren Pflanzen auf die Querförderbänder zu lösen.

Die vorliegende Erfindung hat sich daher zur Aufgabe gesetzt, einen mit Querförderbändern ausgestatten Erntevorsatz zur Ganzpflanzenernte insbesondere größerer Pflanzen, wie Mais, bereit zu stellen, bei dem Übergangsprobleme von den Mäh- und Einzugseinrichtungen auf das rückwärtig davon angeordnete Querförderband zumindest in vermindertem Maße auftreten.

### Erfindung

Die vorliegende Erfindung wird durch die Patentansprüche definiert.

Ein Erntevorsatz zur Ganzpflanzenernte, der an einer Erntemaschine anbringbar und in einer Vorwärtsrichtung über ein Feld bewegbar ist, umfasst:
ein tragendes Gestell,
eine Anzahl an nebeneinander angeordneten Mäh- und Einzugseinrichtungen zum Abschneiden und Abfördern von Pflanzen vom Feld,
ein erstes Querförderband und ein zweites Querförderband zur Querförderung der durch die Mäh- und Einzugseinrichtungen aufgenommenen Pflanzen in Richtung auf die Längsmittelebene des Erntevorsatzes, wobei die Querförderbänder jeweils mit quer zur Förderrichtung ausgerichteten Mitnehmern ausgestattet sind, und
einen Abgabeförderer zur Förderung der von den Querförderbändern einlaufenden Pflanzen nach hinten zu einer rückwärtigen Abgabestelle des Erntevorsatzes,
wobei die Querförderbänder an ihren Vorderseiten, zusätzlich zu den Mitnehmern, mit Erhebungen ausgestattet sind.

Die Querförderbänder umfassen demnach neben dem eigentlichen Förderband und quer zur Förderrichtung ausgerichteten, über die Länge des Förderbands verteilten Mitnehmern an ihren Vorderseiten Erhebungen. Diese Erhebungen wirken mit den unteren Enden der Pflanzen zusammen und verbessern die Annahme der Pflanzen durch das Förderband.

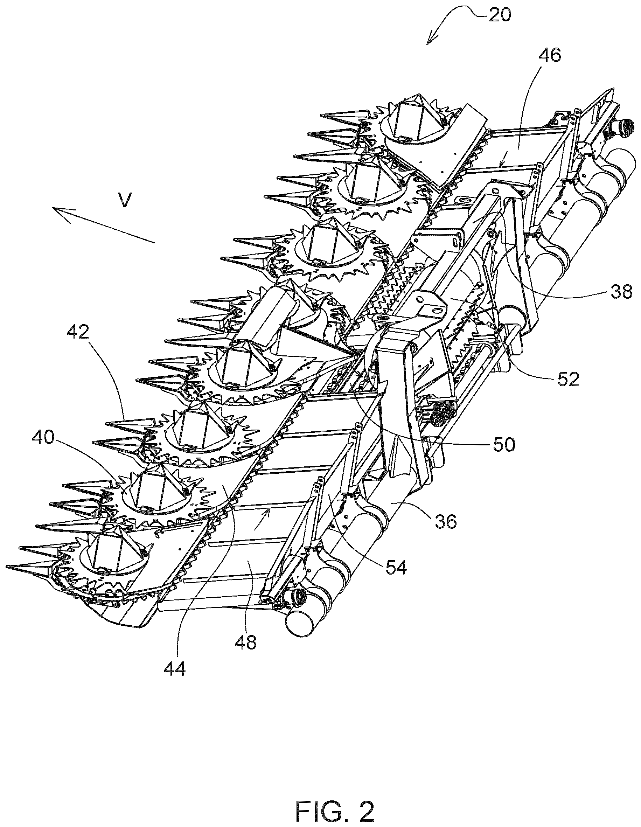

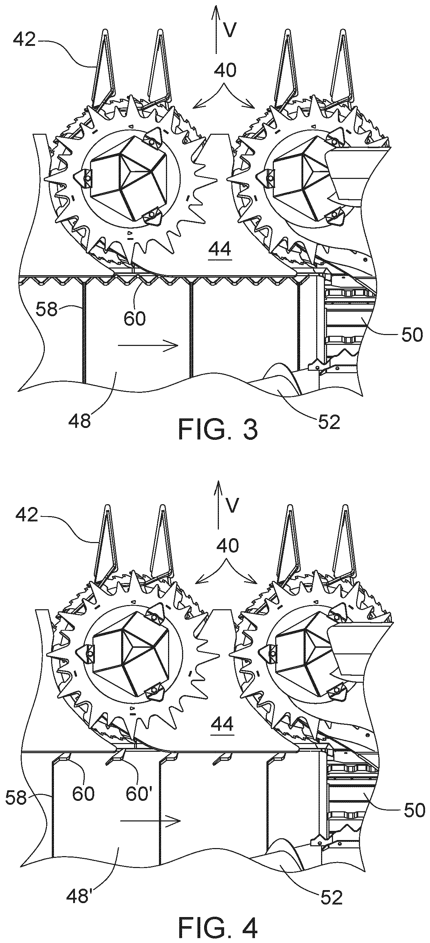

Die Erhebungen sind insbesondere derart ausgeformt, dass sie die unteren Enden der von den Mäh- und Einzugseinrichtungen abgegebenen Pflanzen erfassen und aktiv abfördern. Hierzu können die Mitnehmer eine vorlaufende Kante umfassen, die sich von einem in Vorwärtsrichtung vorderen Ende ausgehend schräg zur Vorwärtsrichtung nach hinten und gegenüber der Förderrichtung schräg nach hinten oder vorn erstreckt. Die Kante erfasst das untere Ende der einlaufenden Pflanze und bewegt diese in der Förderrichtung nach vorn und entgegen der Vorwärtsrichtung nach hinten oder vorn, d.h. hat ein aggressives Förderverhalten zur aktiven An- und Mitnahme der Pflanzen. Im ersten Fall mit sich vom vorderen Ende in der Förderrichtung schräg nach hinten erstreckender vorlaufender Kante, wie sie in den Ausführungsformen nach Figur 4, 6 und 7 dargestellt wird, wird die Unterseite der Pflanzen entgegen der Vorwärtsrichtung nach hinten gedrängt. Im zweiten Fall mit sich vom vorderen Ende in der Förderrichtung schräg nach vorn erstreckender vorlaugender Kante, wie in den Figuren 2, 3 und 5 dargestellt, wird die Unterseite der Pflanze in Vorwärtsrichtung nach vorn gedrängt. Hier kann die Pflanze mit der Rückseite eines Abstreifers zusammenwirken.

Die Erhebungen können sich durchgehend entlang der Querförderbänder erstrecken oder benachbarte Erhebungen in Förderrichtung der Querförderbänder voneinander beabstandet sein.

Die Erhebungen können durch zickzackförmige Stege gebildet werden, die vorderseitige Taschen umfassen, oder die Erhebungen werden durch Finger gebildet, die sich schräg zur Vorwärtsrichtung und zur Förderrichtung des Querförderbands erstrecken.

Die Mäh- und Einzugseinrichtungen können jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

### Ausführungsbeispiel

In den Zeichnungen ist ein nachfolgend näher beschriebenes Ausführungsbeispiel der Erfindung dargestellt. Es zeigt:
Fig. 1 eine schematische Ansicht einer Erntemaschine mit einem Erntevorsatz zur Ganzpflanzenernte,
Fig. 2 eine perspektivische Ansicht des Erntevorsatzes der Figur 1 von der linken Seite und schräg hinten betrachtet,
Fig. 3 eine vergrößerte, perspektivische Draufsicht auf einen Teil des Erntevorsatzes gemäß der Figuren 1 und 2,
Fig. 4 eine vergrößerte, perspektivische Draufsicht auf einen Teil des Erntevorsatzes gemäß einer zweiten Ausführungsform,
Fig. 5 eine perspektivische Ansicht des Förderbands des Erntevorsatzes nach Figur 1 bis 3,
Fig. 6 eine perspektivische Ansicht des Förderbands des Erntevorsatzes nach Figur 4, und
Fig. 7 eine vergrößerte Ansicht eines Fingers des Förderbands der Figur 6.

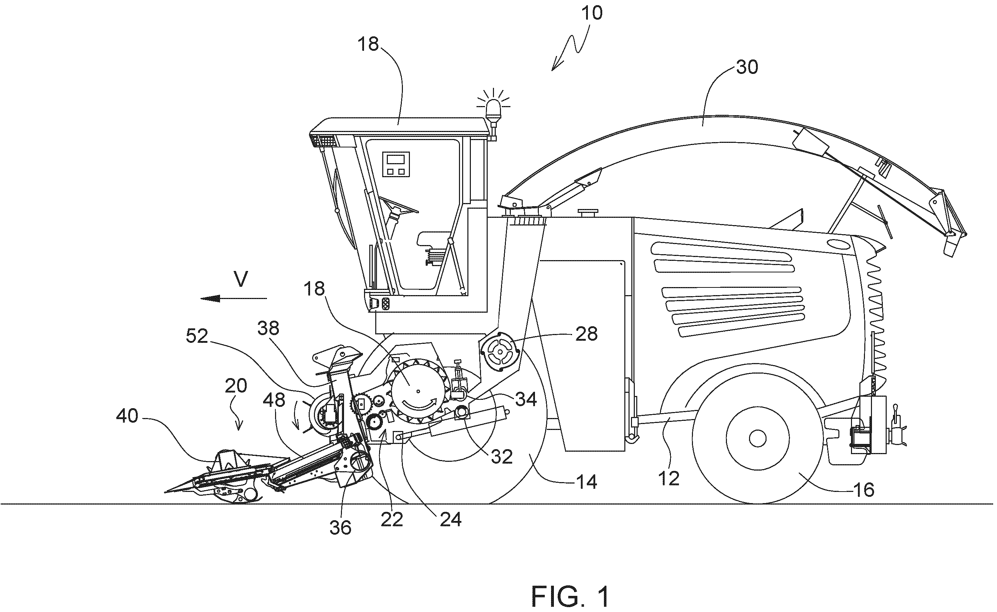

In der Figur 1 ist ein selbstfahrender Feldhäcksler 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 zur Ganzpflanzenernte einsehbar ist. Mittels des Erntevorsatzes 20 vom Boden aufgenommenes Erntegut, z. B. Mais oder andere, stängelartige Pflanzen, wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es im Zusammenwirken mit einer Gegenschneide in kleine Stücke häckselt und es nach Durchlauf durch eine Nachbearbeitungseinrichtung mit zwei Prozessorwalzen 32, 34 einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V des Feldhäckslers 10, die in der Figur 1 nach links verläuft.

Die Figur 2 zeigt eine perspektivische Ansicht des Erntevorsatzes 20, der sich zur Ganzpflanzenernte eignet. Der Erntevorsatz 20 baut sich auf einem tragenden Gestell 36 auf, das in der Mitte mit einem rückwärtigen Anbaurahmen 38 versehen ist. Der Anbaurahmen 38 dient zur Anbringung des Erntevorsatzes 20 am Einzugsgehäuse 24 des Feldhäckslers 10. Der Anbaurahmen 38 weist als Abgabestelle für die geernteten Pflanzen eine mittige Abgabeöffnung auf, durch welche von einem Feld aufgenommenes Erntegut in den Einzugsförderer 22 abgebbar ist.

Das tragende Gestell 36 haltert an seiner Vorderseite eine Anzahl (im dargestellten Ausführungsbeispiel acht) von Mäh- und Einzugseinrichtungen 40, wie sie an üblichen Erntevorsätzen zur Ernte größerer stängelartiger Pflanzen (insbesondere Mais) verwendet werden. Die Mäh- und Einzugseinrichtungen 40 umfassen in an sich bekannter Weise, vgl. EP 0 760 200 A1, untere Schneidscheiben (rotierend oder feststehend) und darüber angeordnete Förderscheiben mit um ihren Umfang verteilten Aussparungen zur Aufnahme von Pflanzen, die mittels der Schneidscheiben von ihren im Boden verbliebenden Wurzeln abgeschnitten werden. Den Mäh- und Einzugseinrichtungen 40 sind Stängelteiler 42 vorgelagert. Die Mäh- und Einzugseinrichtungen 40 (abgesehen von den gegensinnig dazu arbeitenden, äußeren Mäh- und Einzugseinrichtungen 40) fördern im Erntebetrieb die Pflanzen an ihren Vorderseiten zunächst seitlich nach außen, dann nach hinten und letztlich mit ihren Rückseiten nach innen und geben die Pflanzen gegenüber der Drehachse der Mäh- und Einzugseinrichtungen 40 nach außen hin versetzt ab, da die Pflanzen dort durch sich in den Hüllkreis der Förderscheiben der Mäh- und Einzugseinrichtungen 40 eindringende Abstreifer 44 aus den Aussparungen der Förderscheiben der Mäh- und Einzugseinrichtungen 40 nach hinten und innen hinausgehoben werden. Die Pflanzen werden demnach nach hinten und innen hin abgegeben und gelangen, insbesondere durch nachfolgende, von vorn einlaufende Pflanzen nach hinten gedrückt, auf ein Querförderband 46 oder 48, das sich im Erntebetrieb nach innen, in Richtung auf die Längsmittelebene des Erntevorsatzes 20 hin bewegt. In der Mitte des Erntevorsatzes 20 wird das Erntegut durch einen Abgabeförderer 50 übernommen, der das von den Querförderbändern 46 und 48 einlaufende Erntegut nach hinten durch die Abgabeöffnung des Anbaurahmens 38 und in den Einzugsförderer 22 verbringt. Der Abgabeförderer 50 ist im gezeigten Ausführungsbeispiel als Förderband ausgeführt. Die beiden der Längsmittelebene des Erntevorsatzes 20 direkt benachbarten, mittleren Mäh- und Einzugseinrichtungen 40 geben ihr Erntegut direkt dem Abgabeförderer 50 auf. Rückwärtig der Querförderbänder 46, 48 sind Rückwände 54 vorgesehen. In den Figuren erstrecken sich die Längsachsen (Förderrichtungen) der Querförderbänder 46, 48 quer zur Vorwärtsrichtung V. Man könnte sie auch in V-Form anordnen, wie in EP 3 298 879 A1.

Oberhalb des Abgabeförderers 50 ist, der rückwärtigen Abgabeöffnung vorgelagert, eine als Zylinder mit konischen Enden ausgeführte Walze 52 vorgesehen, welche das Einführen der Pflanzen in die Abgabeöffnung erleichtert. Die konischen Enden der Walze 52 sind mit wendelförmigen Mitnehmern versehen, während der mittige, zylindrische Teil der Walze 52 mit sich axial erstreckenden Mitnehmern ausgestattet ist. Die Walze 52 kann in Richtung des in der Figur 1 dargestellten Pfeils angetrieben werden oder sich frei mitdrehen.

Der Erntevorsatz 20 dient somit, da die kompletten, abgeschnittenen Pflanzen in die Erntemaschine gefördert werden, zur Ganzpflanzenernte von größeren stängelartigen Pflanzen, wie Mais. Die Mäh- und Einzugseinrichtungen 40 können (ggf. mit geringfügigen Modifikationen, vgl. EP 0 824 856 A2) auch zur Einbringung so genannter Ganzpflanzensilage, d.h. von Getreidepflanzen, dienen.

Die bezüglich der Vorwärtsrichtung V horizontal oder leicht nach vorn und unten geneigt angeordneten Querförderbänder 46, 48 bewegen sich im Erntebetrieb mit ihren Oberseiten nach innen, während der bezüglich der Vorwärtsrichtung V horizontal oder leicht nach hinten und oben geneigt angeordnete Abgabeförderer 50 sich dann mit seiner Oberseite nach hinten bewegt, wie in der Figur 2 durch die Pfeile angedeutet. Der Antrieb der Mäh- und Einzugseinrichtungen 40 sowie der Querförderbänder 46, 48 und des Abgabeförderers 50 sowie ggf. der Walze 52 kann über einen mechanischen Antriebsstrang vom den Erntevorsatz 20 tragenden Feldhäcksler 10 oder durch zugeordnete Elektro- oder Hydraulikmotoren (nicht gezeigt) erfolgen, die eine Verstellung der Fördergeschwindigkeit und eine Anpassung an die Fördergeschwindigkeit im Einzugsförderer 22 des Feldhäckslers 10 und somit an die Schnittlänge ermöglichen.

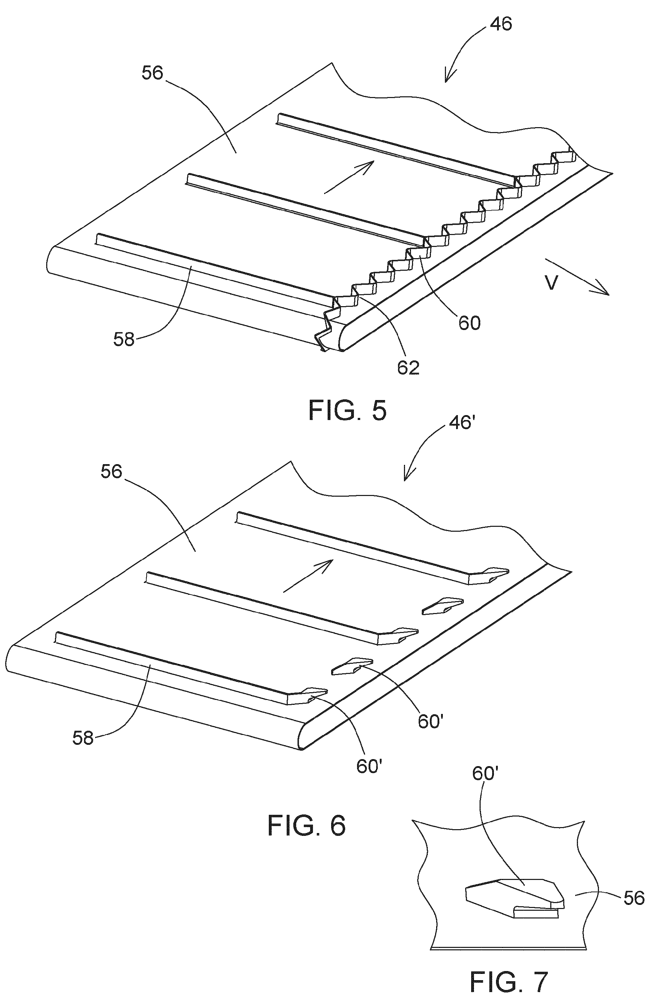

Die Figuren 2, 3 und 5 zeigen eine erste Ausführungsform für die Querförderbänder 46 und 48. Die Figur 5 zeigt das Querförderband 46, während das dort nicht gezeigte Querförderband 48 gegenüber der Längsmittelebene des Erntevorsatzes 20 gegenüber dem Querförderband 46 spiegelsymmetrisch aufgebaut ist, was analog für die Förderbänder 46', 48' der Figuren 4, 6 und 7 gilt. Die Querförderbänder 46, 48 setzen sich in an sich bekannter Weise aus endlosen (eigentlichen) Förderbändern 56 und daran befestigten, sich quer zur durch Pfeile angedeuteten Förderrichtung erstreckenden Mitnehmern 58 zusammen, die sich über die gesamte Breite der Förderbänder 56 oder einen Teil davon erstrecken. Unter "endlos" ist hier lediglich zu verstehen, dass die Enden der Förderbänder 56 untereinander verbunden sind. Es kann sich hier demnach um Förderbänder handeln, deren Enden durch Verbindungsstellen abnehmbar gekoppelt sind (s. EP 2 143 319 A2) oder die beiden Enden der Förderbänder können unlösbar verbunden sein, z.B. zusammenvulkanisiert, oder die Förderbänder können einteilig hergestellt werden.

Zudem weisen die Querförderbänder 46, 48 gemäß der ersten Ausführungsform (nur) im Bereich ihrer Vorderseiten, die im eingebauten Zustand den Mäh- und Einzugseinrichtungen 40 unmittelbar benachbart sind, zusätzliche Erhebungen 60 auf. Diese stegartigen Erhebungen 60 erstrecken sich über die gesamte Länge des Querförderbands 46, 48, d.h. durchgehend. Die Erhebungen 60 sind in der unmittelbar vor den vorderen Enden der Mitnehmer 58 angeordnet. In der Draufsicht sind die Erhebungen 60 schlaufen- oder zickzackförmig. Dadurch bilden die Erhebungen 60 zwischen benachbarten Mitnehmern 58 eine Anzahl von nach vorn offenen Taschen 62, die derart dimensioniert sind, dass das untere Ende eines vertikal orientierten (Mais-) Pflanzenstängels hineinpasst. Die jeweils in Förderrichtung vorlaufende Kante der Taschen 62 erstreckt sich von einem in Vorwärtsrichtung V vorderen Ende ausgehend gegenüber der Vorwärtsrichtung V nach hinten und gegenüber der Förderrichtung der Förderbänder 46, 48 nach vorn, schräg und in einem Winkel von ca. 45°, der auch kleiner oder größer sein könnte.

Diese Taschen 62 werden, nachdem die Erhebungen 60 die Pflanzen an den Übergabestellen rückwärtig der Mäh- und Einzugseinrichtungen 40 von diesen übernommen haben, stromab der Übergabestellen nach vorn durch die als Abstreifer und vordere Begrenzung der Taschen 62 dienenden Abstreifer 44 begrenzt. Die Pflanzen werden demnach durch die vorlaufenden Kanten der Taschen 62 in Förderrichtung der Förderbänder 46, 48 und bezüglich der Vorwärtsrichtung nach vorn gedrängt. Die rückwärtigen Kanten der Abstreifer 44 halten die Pflanzen in den Taschen 62 und verhindern, dass die unteren Enden der Pflanzen nach vorn aus den Taschen 62 hinausrutschen.

Da die Erhebungen 60 sich mit den Förderbändern 56 auch um deren Umlenkrollen bewegen, sind sie aus geeigneten, flexiblen Materialien, wie beispielsweise Gummi, hergestellt. Es wäre denkbar, die zickzackförmigen Erhebungen 60 nicht, wie in den Zeichnungen gezeigt, einteilig herzustellen, sondern aus zylindrischen Elementen aufzubauen, die quer von der Oberfläche des eigentlichen Förderbands 56 abstehen (s. DE 10 2015 117 787 A1, deren Offenbarung durch Verweis mit in die vorliegenden Unterlagen aufgenommen wird), in den Figuren nicht gezeigt. Auch könnte man zwischen eine Tasche 62 bildenden Erhebungen 60 jeweils eine Lücke einfügen, in der die Vorderseite des Förderbands 46, 48 nicht mit Erhebungen 60 ausgestattet ist, analog zur Ausführungsform nach Figur 4, 6 und 7. Die Erhebungen 60 sind in der Ausführungsform nach den Figuren 2, 3 und 5 mit ihren vorderen Kanten rückwärtig der Abstreifer 44 angeordnet und ragen nicht nach oben darüber hinaus, obwohl letzteres auch denkbar wäre.

Bei der zweiten Ausführungsform der Querförderbänder 46' und 48', die in den Figuren 4, 6 und 7 gezeigt wird, sind die Erhebungen 60' ebenfalls an der Vorderseite der endlosen Förderbänder 56 angeordnet und ihre Längsachsen erstrecken sich von ihrem vorderen Ende ausgehend schräg zur Vorwärtsrichtung V des Erntevorsatzes 20 und schräg zur Förderrichtung des Querförderbands 46, 48', jeweils nach hinten gerichtet (bzw. von ihrem rückwärtigen Ende ausgehend schräg nach vorn). Die Längsachsen der Erhebungen 60' schließen demnach sowohl einen Winkel mit der Vorwärtsrichtung V als auch mit der Förderrichtung der Förderbänder 56 der Querförderbänder 46, 46', 48, 48` ein. Bei der zweiten Ausführungsform sind die einzelnen Erhebungen 60' voneinander getrennt und im Abstand zueinander angeordnet. In der gezeigten Ausführungsform ist jeweils eine Erhebung 60' einem Mitnehmer 58 direkt vorgelagert, d.h. schließt sich direkt nach vorn an dessen vorderes Ende an und erstreckt sich von schräg zur Vorwärtsrichtung V und zur Förderrichtung. Zudem sind weitere Erhebungen 60' etwa mittig zwischen zwei unmittelbar benachbarten Mitnehmern 58 angebracht. Die Erhebungen 60' sind hier als Finger ausgeführt, die sich von einer mit den endlosen Förderbändern 56 verbundenen Unterseite nach oben und schräg nach vorn erstrecken. Die Erhebungen 60' sind in Draufsicht symmetrisch zu ihrer Längsachse keilförmig ausgeführt und bilden eine vordere Spitze. Von der Seite her betrachtet, bilden die Erhebungen 60' im unteren Bereich eine vordere, sich orthogonal zur Oberfläche des endlosen Förderbands 56 erstreckende Kante. Über dieser Kante laufen die Erhebungen 60' keilförmig nach vorn, mit einer sich schräg nach oben und vorn erstreckenden Unterseite und einer sich parallel zur Oberfläche des endlosen Förderbands 56 erstreckenden Oberseite. Die vorderen Enden der Erhebungen 60' ragen zwar nach vorn über den Abstreifer 44 hinaus, befinden sich aber darunter (d.h. sie laufen unterhalb der Abstreifer 44 entlang), obwohl denkbar wäre, dass sie sich oberhalb und/oder rückwärtig des Abstreifers 44 befinden. Die vorlaufenden Kanten der Erhebungen 60' ausgehend von einer vorlaufenden, vorderen Spitze entgegen der Vorwärtsrichtung V und der Förderrichtung der Förderbänder 48, 48' nach hinten hin abgewinkelt, hier in einem Winkel von ca. 45°, der auch größer oder kleiner als dargestellt sein könnte.

Die Wirkungsweise der Erhebungen 60, 60' beider Ausführungsformen ist derart, dass sie den unteren Enden der Pflanzen, die von den Mäh- und Einzugseinrichtungen 40 nach hinten hin zum Querförderband 46, 48 bzw. 46', 48` abgegeben werden, eine aktive Förderung bereitstellen, denn die unteren Enden der Pflanzen werden entweder durch die Taschen 62 der Erhebungen 60 aufgenommen und - insbesondere im Zusammenwirken mit den rückwärtigen Kanten der Abstreifer 44 mitgefördert, oder sie werden durch die vorlaufenden Flanken der Erhebungen 60' erfasst und in Förderrichtung der Querförderbänder 46, 46', 48, 48` mitgenommen und entgegen der Vorwärtsrichtung V nach hinten gelenkt. Auf diese Weise erhält man, zusätzlich zu der Förderwirkung der Mitnehmer 58, durch die Erhebungen 60, 60' eine aktive Förderung der einlaufenden Pflanzen, die insbesondere verhindert, dass die von den Mäh- und Einzugseinrichtungen 40 abgegebenen Pflanzen auf dem Förderband 56 rutschen und an Ort und Stelle stehenbleiben oder umfallen und erst später oder überhaupt nicht durch das Querförderband 46, 46', 48, 48' mitgenommen werden, sondern sie werden durch die Erhebungen 60 oder 60' aktiv abgefördert.

Die Erhebungen 60, 60' wirken, wie bereits erwähnt, stromab der Übergabestellen, an denen sie das Erntegut von den Mäh- und Einzugseinrichtungen 40 an deren Rückseiten erhalten, mit den rückwärtigen Enden der Abstreifer 44 zusammen, die einerseits als Abstreifer für die Mäh- und Einzugseinrichtungen 40 dienen und andererseits eine sich etwa vertikal erstreckende, vordere Begrenzungswand oberhalb der Vorderkante der Querförderbänder 46, 46', 48, 48' bilden. Dadurch wird einerseits der Pflanze eine Abstützung gegeben, damit sie nicht nach vorn von den Querförderbändern 46, 46', 48, 48' abrutscht, andererseits erreicht man hierdurch die beschriebene Förderwirkung für die Pflanzen durch die Erhebungen 60 oder 60`.

## Patentansprüche

1. Erntevorsatz (20) zur Ganzpflanzenernte, der an einer Erntemaschine (10) anbringbar und in einer Vorwärtsrichtung (V) über ein Feld bewegbar ist, umfassend:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46, 46`) und ein zweites Querförderband (48, 48`) zur Querförderung der durch die Mäh- und Einzugseinrichtungen (40) aufgenommenen Pflanzen in Richtung auf die Längsmittelebene des Erntevorsatzes (20), wobei die Querförderbänder (46, 46', 48, 48') jeweils mit quer zur Förderrichtung ausgerichteten Mitnehmern (58) ausgestattet sind, und
einen Abgabeförderer (50) zur Förderung der von den Querförderbändern (46, 46', 48, 48`) einlaufenden Pflanzen nach hinten zu einer rückwärtigen Abgabestelle des Erntevorsatzes (20),
**dadurch gekennzeichnet, dass** die Querförderbänder (46, 46', 48, 48`), zusätzlich zu den Mitnehmern (58), an ihren Vorderseiten mit Erhebungen (60, 60`) ausgestattet sind.

2. Erntevorsatz (20) nach Anspruch 1, wobei die Erhebungen (60, 60`) derart ausgeformt sind, dass sie die unteren Enden der von den Mäh- und Einzugseinrichtungen (40) abgegebenen Pflanzen erfassen und aktiv abfördern.

3. Erntevorsatz (20) nach Anspruch 2, wobei die Erhebungen (60, 60`) eine vorlaufende Kante umfassen, die sich von einem in Vorwärtsrichtung (V) vorderen Ende ausgehend schräg zur Vorwärtsrichtung (V) und bezüglich der Förderrichtung des Querförderbands (46, 46', 48, 48`) schräg nach vorn oder hinten erstreckt.

4. Erntevorsatz (10) nach einem der Ansprüche 1 bis 3, wobei die Erhebungen (60) sich durchgehend entlang der Querförderbänder (46, 48) erstrecken oder benachbarte Erhebungen (60`) in Förderrichtung der Querförderbänder (46', 48`) voneinander beabstandet sind.

5. Erntevorsatz (20) nach Anspruch 4, wobei die Erhebungen (60) durch zickzackförmig angeordnete Stege gebildet werden, die vorderseitige, nach vorn geöffnete Taschen (62) bilden, in welchen die unteren Enden der von den Mäh- und Einzugseinrichtungen (40) einlaufenden Pflanzen Aufnahme finden.

6. Erntevorsatz (20) nach Anspruch 5, wobei die zickzackförmig angeordneten Stege sich durchgehend oder voneinander beabstandet über die Länge des Querförderbands (46, 48) erstrecken oder durch getrennte, zylindrische Elemente gebildet werden, die quer von der Oberfläche des eigentlichen Querförderbands (46, 48) abstehen und die unteren Enden der von den Mäh- und Einzugseinrichtungen (40) einlaufenden Pflanzen erfassen.

7. Erntevorsatz (20) nach Anspruch 4, wobei die Erhebungen (60`) durch in Längsrichtung des Förderbands (46', 48') voneinander beabstandete, vom Förderband (46', 48') abstehende Finger gebildet werden, die sich schräg zur Vorwärtsrichtung (V) und zur Förderrichtung des Querförderbands (46', 48`) jeweils nach vorn hin erstrecken.

8. Erntevorsatz (20) nach einem der Ansprüche 1 bis 7, wobei die Mäh- und Einzugseinrichtungen (40 jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

9. Erntevorsatz (20) nach Anspruch 8, wobei die Pflanzen an den Rückseiten der Mäh- und Einzugseinrichtungen (40) durch sich in den Hüllkreis der Förderscheiben der Mäh- und Einzugseinrichtungen (40) eindringende Abstreifer (44) aus den Aussparungen der Förderscheiben der Mäh- und Einzugseinrichtungen (40) nach hinten und innen hinausgehoben werden.

10. Erntevorsatz (20) nach Anspruch 9, wobei die Abstreifer (44) stromab der Abgabestelle der Pflanzen durch die Mäh- und Einzugseinrichtung (40) an die Querförderbänder (46, 46', 48, 48`) eine sich etwa vertikal erstreckende, vordere Begrenzungswand oberhalb der Vorderkante der Querförderbänder (46, 46', 48, 48`) bilden.

11. Erntevorsatz (20) nach Anspruch 10, wobei die Mitnehmer (60, 60`) mit ihren vorderen Enden nach vorn und/oder oben über die Abstreifer (44) ragen oder sich darunter und/oder dahinter befinden.
